# EUROPÄISCHE PATENTSCHRIFT

(11) **EP 2 527 253 B1**
(45) Veröffentlichungstag und Bekanntmachung des Hinweises auf die Patenterteilung: **16.10.2013**
(21) Anmeldenummer: 12003765.0
(22) Anmeldetag: 11.05.2012
(51) Int. Cl.: B64D 15/04, B64D 33/02, F01D 25/02, F02C 7/047

(54) **Enteisungsvorrichtung eines Flugzeuggasturbinentriebwerks**
De-icing device for an aviation gas turbine engine
Dispositif de dégivrage d'une turbine à gaz volatil

(30) Priorität: 24.05.2011 DE 102011102458
(43) Veröffentlichungstag der Anmeldung: 28.11.2012
(73) Patentinhaber: Rolls-Royce Deutschland Ltd & Co KG, 15827 Blankenfelde-Mahlow (DE)
(72) Erfinder: Todorovic, Predrag, 10437 Berlin (DE)
(74) Vertreter: Hoefer & Partner

(56) Entgegenhaltungen:
- EP-A2- 0 376 371
- GB-A- 2 259 679
- US-A- 6 079 670
- US-A1- 2009 152 401

## Beschreibung

Die Erfindung bezieht sich auf eine Enteisungsvorrichtung eines Fluggasturbinentriebwerks gemäß dem Oberbegriff des Anspruchs 1.

Im Einzelnen bezieht sich die Erfindung auf eine Enteisungsvorrichtung, welche in einer Triebwerksverkleidung in deren Einströmbereich angeordnet ist.

Aus dem Stand der Technik ist es bekannt, innerhalb eines doppelwandig ausgebildeten Einströmbereichs einer Triebwerksverkleidung angrenzend an einen Anströmbereich oder eine Ringlippe ein kreisringförmiges Rohrelement anzubringen, in welches Heißluft eingeführt wird, welche durch Ausströmöffnungen des Rohrelements austritt und somit von der Innenseite die Wandung der Ringlippe beheizt (piccolo tube Enteisungs-Prinzip).

Ein derartiges ringförmiges Rohrelement weist konstruktionsbedingt einen sehr großen Durchmesser auf. Dies führt, zusammen mit den sich während des Betriebs einer Fluggasturbine stark ändernden Temperaturen, zu starken thermischen Ausdehnungen bzw. Kontraktionen, welche zu starken thermischen Spannungen führen. Diese thermischen Spannungen beeinträchtigen nicht nur das ringförmige Rohrelement selbst, sondern auch dessen Lagerung. Deshalb zeigt der Stand der Technik, beispielsweise die US 6,079,670, sehr aufwändige Maßnahmen, um das Rohrelement so zu lagern, dass die Lagerung selbst durch die thermischen Ausdehnungen bzw. Kontraktionen nicht beschädigt wird. All dies führt zu hohen Herstellkosten sowie zu einem erheblichen Gewicht der Gesamtkonstruktion und bedingt Fehler durch Bauteilversagen, wie etwa Verschleiß, welche durch aufwändige Wartungs- und Überprüfungsmaßnahmen begleitet werden.

Die US 2009/152401 A1 welche als nächstliegender Stand der Technik betrachtet wird offenbart eine Enteisungsvorrichtung eines Fluggasturbinentriebwerks mit einzelnen Rohrsegmenten, welche mittels Lagerhülsen miteinander verbunden sind. Dabei sind die Lagerhülsen mit dem jeweiligen Rohrsegment verschweißt, sodass eine Bewegung der Rohrsegmente relativ zueinander ausgeschlossen ist. Zum Ausgleich thermischer Kontraktionen und Expansionen ist ein Ausgleichsspalt an jeweils gegenüberliegenden, geschlossenen Enden des Rohrelements vorgesehen.

Bei der aus der US 6 079 670 A bekannten Enteisungsvorrichtung ist ein ringförmiges Rohrelement vorgesehen, bei welchem eine Relativbewegung nicht möglich ist, da das Rohrelement einteilig ausgebildet ist und nicht aus einzelnen Rohrsegmenten besteht.

Der Erfindung liegt die Aufgabe zugrunde, eine Enteisungsvorrichtung der eingangs genannten Art zu schaffen, welche bei einfachem Aufbau und einfacher, kostengünstiger Herstellbarkeit die Nachteile des Standes der Technik vermeidet und mit einer einfachen Lagerung versehen werden kann.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass das Rohrelement in Umfangsrichtung aus mehreren einzelnen Rohrsegmenten aufgebaut ist welche relativ zueinander teleskopartig bewegbar sind (Teleskop-Prinzip).

Durch die Auftrennung des Rohrelements in einzelne Rohrsegmente ist es möglich, die thermischen Ausdehnungen oder Kontraktionen an den Übergangsstellen zwischen den einzelnen Rohrelementen zu kompensieren. Die Rohrelemente bewegen sich somit bei ihrer Ausdehnung bzw. Kontraktion relativ zueinander, ohne dass hierdurch Kräfte auf die Lagerung des Rohrelements selbst aufgebracht würden. Die Lagerung kann somit unabhängig von thermischen Einflüssen in einfacher, kostengünstiger Weise ausgebildet sein. Es wird somit eine nach dem Stand der Technik auftretende radiale Bewegung durch Bewegungen zwischen den einzelnen Rohrsegmenten (Teleskop-Prinzip) ersetzt.

Durch die Relativbewegung der einzelnen Rohrsegmente zueinander ergibt sich ein im Wesentlichen wartungsfreies Gesamtsystem, welches eine hohe Lebenserwartung aufweist und für Spannungsrisse oder Ähnliches unanfällig ist.

Die Bewegbarkeit der einzelnen Rohrsegmente zueinander erfolgt bevorzugter Weise über Steckverbindungen, mittels derer die einzelnen Rohrsegmente untereinander gekoppelt sind. Da die zugeführte Heißluft durch Ausnehmungen der Rohrsegmente austritt, müssen die Steckverbindungen nicht dicht ausgeführt sein, vielmehr ist es tolerierbar, wenn im Bereich der Steckverbindungen ein geringes Volumen an Heißluft austritt.

Die Steckverbindungen sind bevorzugter Weise mittels Gleitdichtungen gegeneinander abgedichtet. Derartige Gleitdichtungen sind bevorzugter Weise ringförmig ausgebildet und erlauben sowohl eine Bewegung der einzelnen Rohrsegmente zueinander in Axialrichtung, als auch Kippbewegungen oder Bewegungen in radialer Richtung, welche ebenfalls durch thermisch bedingte Änderungen des Durchmessers der einzelnen Rohrsegmente hervorgerufen sind.

Erfindungsgemäß ist es besonders günstig, wenn die Rohrsegmente jeweils mittig, bezogen auf ihre Erstreckung in Umfangsrichtung, gelagert sind. Diese Lagerung erfolgt bevorzugter Weise über jeweils einen Lagerträger (fester Lagerbock), welcher fest mit dem Rohrsegment verbunden werden kann. Am Übergangsbereich zwischen dem Lagerträger und dem Rohrsegment treten keine thermisch bedingten Kräfte auf, so dass der Lagerträger selbst in einfacher Weise ausgebildet werden kann.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine perspektivische Ansicht eines erfindungsgemäßen, aus Rohrsegmenten zusammengesetzten Rohrelements,
- Fig. 3: eine vergrößerte Detailansicht des Details A von Fig. 2, und
- Fig. 4: eine vergrößerte Darstellung der Lagerung eines Rohrsegments.

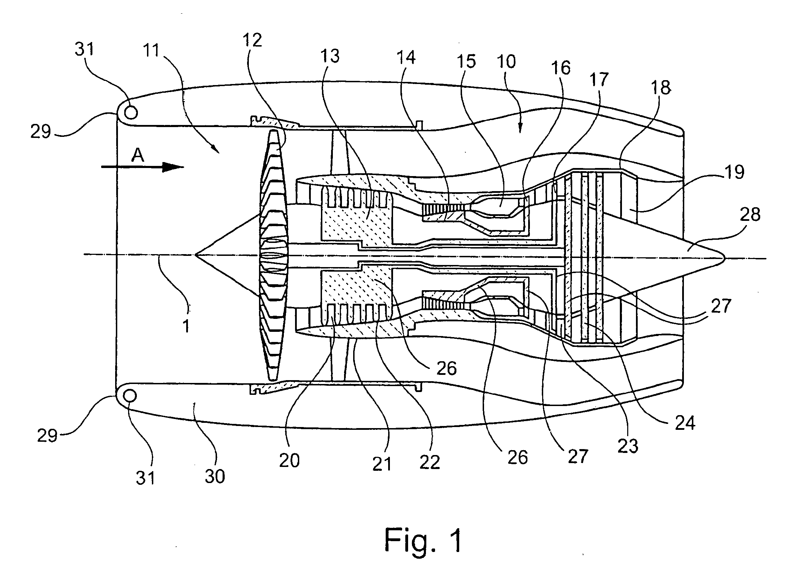

Fig. 1 zeigt eine schematische Darstellung eines Gasturbinentriebwerks gemäß der vorliegenden Erfindung.

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

Das Bezugszeichen 28 bezeichnet einen Auslasskonus.

Weiterhin weist das Gasturbinentriebwerk einen Anströmbereich 29 (Ringlippe) auf, welcher Teil einer Triebwerksverkleidung (nacelle) 30 ist.

Wie aus dem Stand der Technik bekannt, ist innerhalb der Triebwerksverkleidung 30, welche doppelwandig ausgebildet ist, benachbart zu dem Anströmbereich 29, ein ringförmiges Rohrelement 31 angeordnet, welches mit Austrittsöffnungen versehen ist, um zugeführte Heißluft insbesondere an die Innenwandung des Anströmbereichs 29 zu leiten, um dieses zu enteisen.

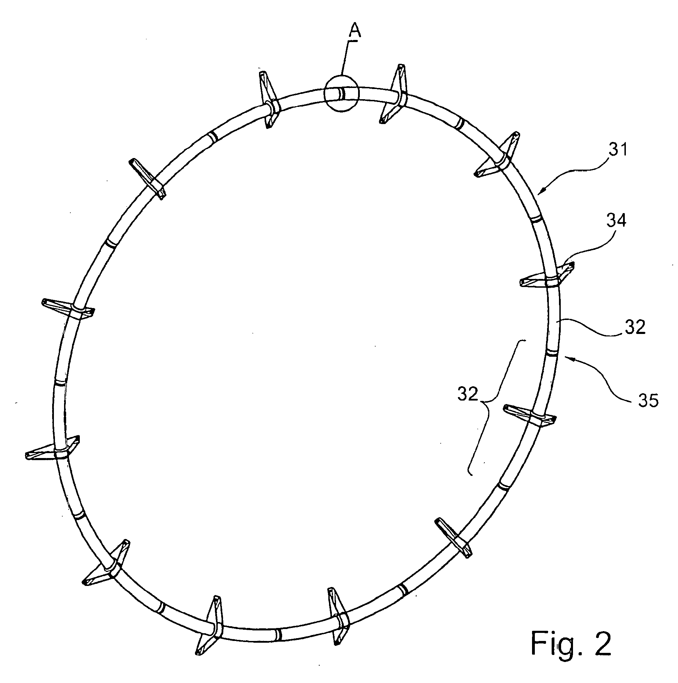

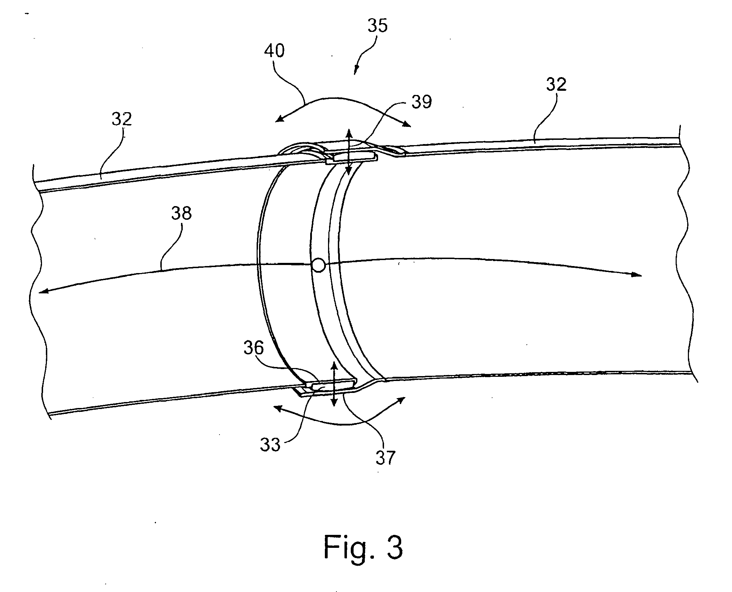

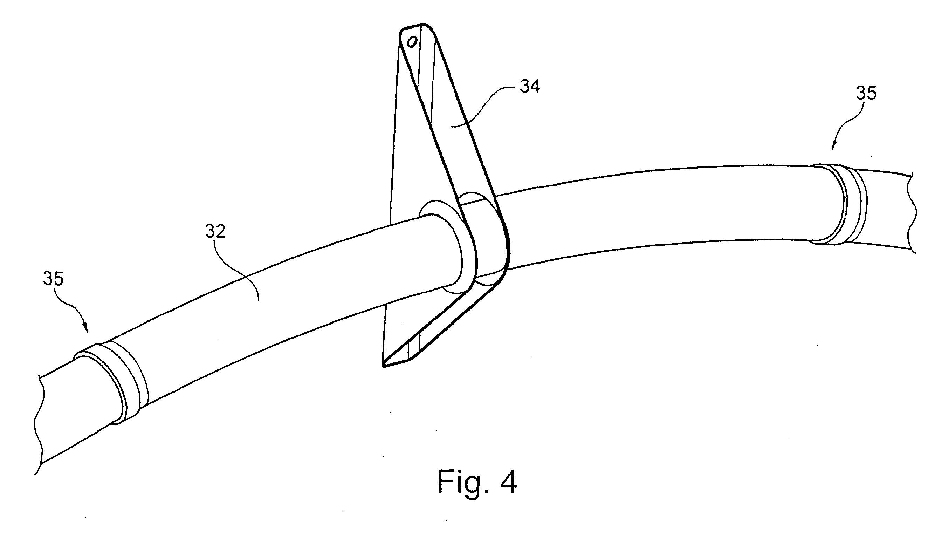

Die Fig. 2 zeigt ein erfindungsgemäßes Rohrelement 31, welches aus einzelnen Rohrsegmenten 32 zusammengesetzt ist. Diese sind jeweils mittig mittels eines Lagerträgers 34 an der Triebwerksverkleidung 30 bzw. an Konstruktionselementen innerhalb der Triebwerksverkleidung 30 gelagert. Die einzelnen Rohrsegmente 32 sind mittels Steckverbindungen 35 miteinander gekoppelt. Diese Steckverbindungen 35 ermöglichen eine Relativbewegung zwischen den einzelnen Rohrsegmenten, so wie diese in Zusammenhang mit den Fig. 3 und 4 nachfolgend beschrieben werden.

Die Fig. 3 zeigt eine vergrößerte Darstellung des Bereichs A von Fig. 2. Dabei sind zwei benachbarte Rohrsegmente 32 dargestellt, welche mittels einer Steckverbindung miteinander gekoppelt sind. Diese Steckverbindung umfasst ein Einsteckende 36 an einem der Rohrsegmente sowie eine hierzu passende Muffe 37 an dem Endbereich des anderen, benachbarten Rohrsegments 32. Zwischen dem Einsteckende 36 und der Muffe 37 ist eine Gleitdichtung 33 angeordnet, welche ringförmig ausgebildet ist und an ihrer radial innen liegenden Seite in einer Ausnehmung des Einsteckendes 36 gehaltert ist. Die Gleitdichtung 33 weist eine sphärische Außenkontur auf.

Die Fig. 3 zeigt, dass die Steckverbindung 35 eine Relativbewegung in Umfangsrichtung (Bezugszeichen 38) des Rohrelements 31 ebenso ermöglicht, wie eine Relativbewegung in Radialrichtung (Bezugszeichen 39) und eine Kippbewegung 40.

Die Fig. 4 zeigt in vergrößerter Darstellung einen Lagerträger 34, welcher als Blechbiegeteil ausgebildet sein kann. Der Lagerträger 34 kann entweder fest mit dem Rohrsegment 32 gefügt sein oder das Rohrsegment 32 kraftschlüssig haltend ausgebildet sein.

### Bezugszeichenliste:

- 1: Triebwerksachse
- 10: Gasturbinentriebwerk
- 11: Lufteinlass / Einströmbereich
- 12: im Gehäuse umlaufender Fan
- 13: Zwischendruckkompressor
- 14: Hochdruckkompressor
- 15: Brennkammern
- 16: Hochdruckturbine
- 17: Zwischendruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -Scheibe
- 27: Turbinenrotornabe
- 28: Auslasskonus
- 29: Anströmbereich/ Ringlippe
- 30: Triebwerksverkleidung (nacelle)
- 31: Rohrelement
- 32: Rohrsegment
- 33: Gleitdichtung
- 34: Lagerträger
- 35: Steckverbindung
- 36: Einsteckende
- 37: Muffe
- 38: Relativbewegung in Umfangsrichtung
- 39: Relativbewegung in Radialrichtung
- 40: Kippbewegung

## Patentansprüche

1. Enteisungsvorrichtung eines Fluggasturbinentriebwerks mit einer zumindest einen Einströmbereich (11) umgebenden Triebswerksverkleidung (30), welche doppelwandig ausgebildet ist und zumindest ein sich in Umfangsrichtung kreisringförmig erstreckendes, Ausströmöffnungen aufweisendes Rohrelement (31) zur Zuführung von Heißluft zur Enteisung eines Anströmbereichs (29) umfasst, **dadurch gekennzeichnet, dass** das Rohrelement (31) in Umfangsrichtung aus mehreren einzelnen Rohrsegmenten (32) aufgebaut ist, welche relativ zueinander teleskopartig befestigbar sind.

2. Vorrichtung nach Anspruch 1, **dadurch gekennzeichnet, dass** die Rohrsegmente (32) mittels Steckverbindungen (35) miteinander gekoppelt sind.

3. Vorrichtung nach Anspruch 1 oder 2, **dadurch gekennzeichnet, dass** die Rohrsegmente (32) mittels Gleitdichtungen gegeneinander abgedichtet sind.

4. Vorrichtung nach einem der Ansprüche 1 bis 3, **dadurch gekennzeichnet**, das die Rohrsegmente (32) jeweils mittig, bezogen auf ihre Erstreckung in Umfangsrichtung, gelagert sind.

5. Vorrichtung nach Anspruch 4, **dadurch gekennzeichnet, dass** die Lagerung durch Lagerträger (34) erfolgt.

## Claims

1. De-icing device of an aircraft gas-turbine engine with an engine cowling (30) enclosing at least one inflow region (11), with the engine cowling (30) having a double-walled design and including at least one annular tube element (31) extending in the circumferential direction and being provided with outlet openings for supplying hot air to de-ice an inflow region (29), **characterized in that** the tube element (31) in the circumferential direction includes multiple individual tube segments (32) which can be attached relative to one another in a telescopic way.

2. Device in accordance with Claim 1, **characterized in that** the tube segments (32) are coupled to one another by means of plug-type connectors (35).

3. Device in accordance with Claim 1 or 2, **characterized in that** the tube segments (32) are sealed from one another by sliding gaskets.

4. Device in accordance with one of the Claims 1 to 3, **characterized in that** the tube segments (32) each are mounted centrally with respect to their extent in the circumferential direction.

5. Device in accordance with Claim 4, **characterized in that** mounting is accomplished by means of mounting supports (34).

## Revendications

1. Dispositif de dégivrage d'un moteur d'avion à turbine à gaz, comprenant un carénage de moteur (30) entourant au moins une zone d'admission (11), lequel est conçu avec une double paroi et comprend au moins un élément tubulaire (31) sous forme d'anneau s'étendant dans le sens circonférentiel et présentant des orifices de sortie destinés à amener de l'air chaud pour dégivrer une zone d'admission (29), **caractérisé en ce que** dans le sens circonférentiel, l'élément tubulaire (31) est constitué de plusieurs segments tubulaires (32) distincts qui peuvent être fixés les uns par rapport aux autres de manière télescopique.

2. Dispositif selon la revendication n° 1, **caractérisé en ce que** les segments tubulaires (32) sont couplés les uns aux autres au moyen de raccords emboîtables (35).

3. Dispositif selon la revendication n° 1 ou n° 2, **caractérisé en ce que** les segments tubulaires (32) sont étanchés les uns par rapport aux autres au moyen de garnitures coulissantes.

4. Dispositif selon une des revendications n° 1 à n° 3, **caractérisé en ce que** les segments tubulaires (32) sont respectivement fixés de manière centrée par rapport à leur extension dans le sens circonférentiel.

5. Dispositif selon la revendication n° 4, **caractérisé en ce que** la fixation est assurée par des supports de palier (34).
